# EUROPÄISCHE PATENTANMELDUNG

(11) **EP 1 652 591 A1**
(43) Veröffentlichungstag der Anmeldung: **03.05.2006**
(21) Anmeldenummer: 05000304.5
(22) Anmeldetag: 08.01.2005
(51) Int. Cl.: B08B 1/04, B08B 3/02, B08B 5/02, B08B 15/00, G06F 3/033

(54) **Anordnung zur automatischen Reinigung von Computertastaturen**

(30) Priorität: 02.11.2004 DE 102004052844
(71) Anmelder: Westhäusler, Jürgen, Dr., 01324 Dresden (DE)
(72) Erfinder: Westhäusler, Jürgen, Dr., 01324 Dresden (DE)

(57) **Zusammenfassung**

Die Erfindung beschreibt eine Anordnung zur automatischen Reinigung von vorzugsweise Tastaturen (1) für die Bedienung von Personalcomputern.
Die Anordnung enthält eine Reinigungssektion (2) mit Halterungsvorrichtungen (3) für die zu reinigenden Tastaturen, einen Reinigungskopf mit mechanischen Antrieben und ferner Bürstenanordnungen (21) für die mechanische Reinigung. Begleitend zu den mechanischen Bürstenfunktionen erfolgt über Sprüheinrichtungen (11) ein Auftrag von Flüssigkeiten für die Reinigung und Desinfektion auf die Tastenoberflächen und Zwischenräume mit nachfolgender Abtrocknung von Feuchtigkeitsrückständen mittels einstellbarer Luft-Ausblasvorrichtungen (17). In einem Versorgungsteil (7) befinden sich Vorratsbehälter (8) und Dosiereinrichtungen (20) für Reinigungs- und Desinfektionsmittel, angeschlossen über lösbare flexible Rohrleitungen (9) und ferner eine Luft-Aufbereitungsbaugruppe (24) mit regelbarem elektrischem Nacherhitzer (10).
Das Gehäuse der Reinigungssektion und die Komponenten der Versorgungseinheit sind in einem kompakten Gehäuse in Form eines Standgerätes für einen stationären Betrieb bzw. einem transportablen Gerät bei mobiler Nutzung für Dienstungsunternehmen mit ständig wechselnden Arbeitsorten untergebracht werden.

## Beschreibung

Die Erfindung beschreibt eine Anordnung zur automatischen Reinigung von vorzugsweise Tastaturen zur Bedienung von Personalcomputern.

Bekanntermaßen werden Computertastaturen in allen Bereichen der Industrie, der Verwaltungen, öffentlicher Einrichtungen und in privaten Umgebungen eingesetzt. Durch die dabei jeweils vorhandenen Umwelteinflüsse lagern sich beim Umgang mit den Tastaturen alle möglichen Schadstoffe ab.

Zur Reinigung von Tastaturen werden Reinigungsmittel unter Verwendung von Reinigungstüchern angeboten. Ferner ist ein mobil verwendbares Computertasten-Reinigungsgerät (DGM Nr. 20 2004 011 297.3) bekannt mit dem mittels rotierender tellerförmiger Bürste die Tasten und Zwischenräume auf den Tastaturen gereinigt werden können. Zur Durchführung der Reinigung bewegt der Benutzer das, vorzugsweise batteriegetriebene Gerät, über die Tastatur. Für den privaten Gebrauch erfüllt dieses Gerät durchaus die notwendigen Anforderungen.
In Bereichen wo viele Personalcomputer im Einsatz sind, ist es nicht sinnvoll jeden Nutzer mit einem mobilen Reinigungsgerät auszurüsten.

Ziel der erfindungsgemäßen Anordnung ist es, ein automatisch arbeitendes Reinigungsgerät für Computertastaturen zu beschreiben, mit dem eine professionelle Reinigung nach qualitativ hochwertigen Anforderungen möglich wird.

Der Erfindung liegt die Aufgabe zugrunde, mit einer Anordnung zur automatischen Reinigung von Computertastaturen, dadurch gekennzeichnet, dass die Anordnung eine Reinigungssektion enthält mit einer Halterungsvorrichtung in die, die zu reinigenden Tastaturen eingelegt werden, wobei die Halterungen so angeordnet sind, dass die Oberflächen der Tastenelemente im Arbeitsbereich eines beweglichen Reinigungskopfes mit mechanischen Befestigungen in der Reinigungssektion ausgerüstet mit mechanischen Antrieben liegen. Der Reinigungskopf ist so ausgeführt, dass er neben Bürstenanordnungen für die mechanische Reinigung weiter Sensorbaugruppen zur Abtastung der Tastenkonturen für eine variable Einstellung von Arbeitspositionen des Reinigungskopfes und ferner Sprüheinrichtungen zum begleitenden Auftragen von Flüssigkeiten für die Reinigung und Desinfektion der Tastenoberflächen und Zwischenräume enthält. Ferner ist eine einstellbare Luft-Ausblasvorrichtungen zur Einleitung von Luftströmen auf die Tastenoberflächen für eine Abtrocknung von Feuchtigkeitsrückständen vorhanden.
Über einen Versorgungsteil mit Vorratsbehältern für Reinigungs- und Desinfektionsmittel, die über lösbare flexible Rohrleitungen mit den Sprüheinrichtungen und Auslässen am Reinigungskopf verbunden sind gelangen diese Flüssigkeiten zu den Oberflächen der Tasten. Ferner ist eine Luft-Aufbereitungsbaugruppe vorhanden mit regelbarem elektrischen Nacherhitzer, der über flexible Rohrleitungen mit den Luftdüsen verbunden ist und weiter einer Absaugeinrichtung, die die Abluft aus der Reinigungssektion absaugt, über ein spezielles Luftfilter reinigt und nachfolgend über einen Fortluft - Auslass ableitet.
Über eine Bedieneinrichtung, angeschlossen an eine elektronische Steuerungsbaugruppe zur Steuerung der mechanischen, elektrischen, pneumatischen und elektronischen Funktionen für die mechanischen Antriebe des Reinigungskopfes, der Flüssigkeitspumpen, der Ventilatoren und weiteren elektrischen und elektronischen Bauteile, die für die einzelnen Reinigungsvorgänge notwendig sind enthält, kann der Benutzer über Bedienelemente und Anzeigen an der Bedieneinrichtung das notwendige Reinigungsprogramm auswählen, starten und den Reinigungsvorgang überwachen.
Die einzelnen Teile der Anordnung sind vorzugsweise in einem kompakten Gehäuse so untergebracht, dass mit entsprechenden Öffnungen im Versorgungsteil ein Austausch der Vorratsbehälter, Auffangbehälter, Verschleißteile des Luftfilters jederzeit möglich ist und über eine verschließbare Klappe in der Reinigungssektion die zu reinigenden Tastaturen eingelegt und entnommen werden können.

Die Vorteile der erfindungsgemäßen Anordnung bestehen vor allem darin, dass hier eine Reinigung von verschiedenster Tastaturen unter gleich bleibenden qualitativen und vor allem hygienischen Anforderungen ausgeführt werden kann. Dabei kann die Reinigungsanordnung in Form eines Standgerätes im Bürobereich, vergleichbar mit den Abmessungen von Kopier- bzw. Druckgeräten oder auch als transportables Gerät für Dienstleistungsunternehmen in der Reinigungsbranche genutzt werden.

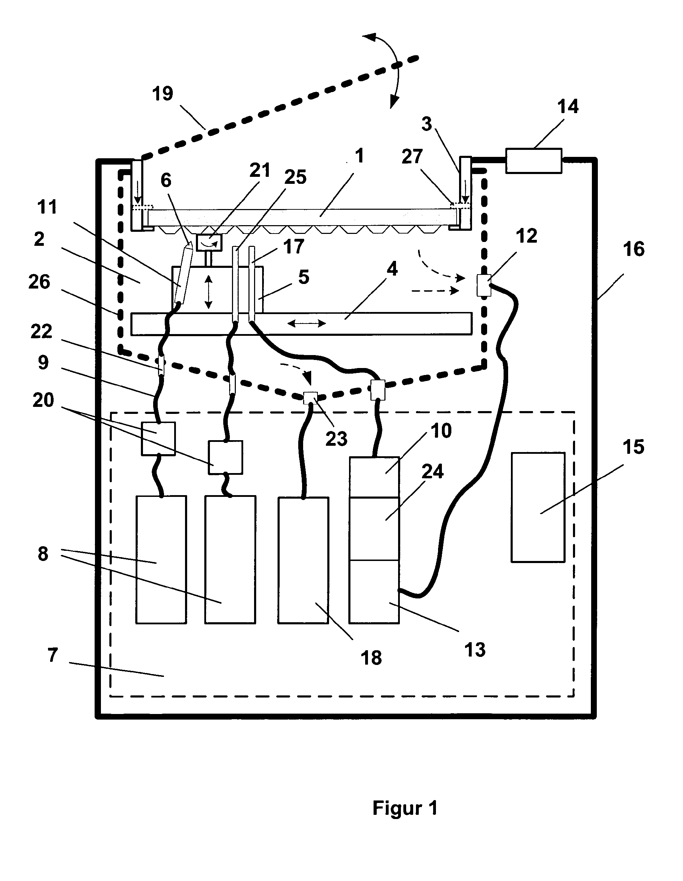

Ein Ausführungsbeispiel der erfindungsgemäßen Anordnung ist in Figur 1 dargestellt und soll im Folgenden näher beschrieben werden.

Es zeigt Figur 1 ein beispielhaftes Schema für ein Tastaturreinigungsgerät in Form eines Standgerätes.
Über eine verschließbare Klappe (19) wird die zu reinigende Tastatur in die mechanische Halterungsvorrichtung (3) mit Schnellverschlüssen (27) in die Reinigungssektion (2) eingelegt. Über entsprechende Tasten an der die Bedieneinrichtung (14) gibt der Benutzer die jeweils bekannten Angaben zum Typ der Tastatur über das Bedienmenü des Reinigungsprogramms, das im Mikrorechner der Steuerungsbaugruppe (15) abläuft, ein. Damit werden über die im Speicher der Mikrorechner bekannten topologischen Strukturen der verschiedenen Tastaturausführungen die notwendigen Voreinstellungen zum Ablauf der nun folgenden Vorgänge vorgenommen. Für den Fall, dass die Tastaturen mit außen angebrachten Kennzeichnungen in Form von Balkencodes oder drahtlos wirkender Transponder-Bauteilen ausgerüstet sind, erfolgt eine automatische Erkennung des Typs der Tastatur über Sensoren die im Bereich der Halterungsvorrichtung (3) vorhanden sind.

Gleichzeitig mit dem Einlegen der Tastatur (1) erfolgt das Anschließen der Steckverbindung am Tastaturkabel durch den Benutzer an der Diagnosebuchse in der Nähe der Halterung. Somit kann begleitend zum Reinigungsprozess eine Diagnose wichtiger Tastaturfunktionen durchgeführt werden. Bei drahtlos funktionierenden Tastaturen erfolgt die Verbindungsaufnahme über eine im Bereich der Halterung positionierten Sende-Empfangsbaugruppe.
Nach Verschließen der Klappe (19) kann das Reinigungsprogramm durch den Bediener an der Bedieneinrichtung (14) gestartet werden. Mit erfolgtem Start wird die Klappe (19) mittels elektromechanisch wirkender Verriegelungselemente gegen ein unbeabsichtigtes Öffnen gesichert.
Der Reinigungskopf (4) in der Reinigungssektion (2) ist in horizontaler Position parallel zur Tastaturebene angeordnet und enthält mechanische Antriebsbauteile (5) mit mehrdimensionalen Wirkungsrichtungen die durch die Steuerungsbaugruppe gesteuert werden. Bei der hier gezeigten Anordnung übernimmt eine rotierende tellerförmige Bürste angetrieben durch einen drehzahlgesteuerten Elektromotor die Reinigung der Tastenoberflächen und Zwischenräume. Über das Steuerprogramm bewegt sich die Bürste in der zweidimensionalen Tastenebene wobei der notwendige Arbeitsabstand der Bürste zur Tastenoberfläche, wichtig für Tastaturen mit gewölbten Oberflächen, über einen weiteren Antrieb sichergestellt wird. Dabei wird der vorhandene Abstand zwischen Reinigungskopf (4) und Tastenkontur über einen optischen Abstandsmesssensor am Reinigungskopf permanent überwacht.

Begleitend zur mechanischen Reinigung durch die Bürste wird über einstellbare Sprüheinrichtungen (11), befestigt am Reinigungskopf, aus einem Vorratsbehälter im Versorgungsteil (7) mit Dosierbaugruppen (20) Reinigungsflüssigkeit zum Anlösen von stark verschmutzten Oberflächen auf die zu reinigenden Flächen aufgetragen.
Im Anschluss an diese Reinigung wird zur Sicherstellung hygienischer Anforderungen ein spezielles Desinfektionsmittel über einstellbare Sprüheinrichtungen (11), befestigt am Reinigungskopf, aus einem Vorratsbehälter im Versorgungsteil (7) mit Dosierbaugruppen (20) auf die gereinigten Flächen aufgetragen.
Über eine Luftaufbereitungsbaugruppe (24) wird nachfolgend mittels einer einstellbaren Luft-Ausblasvorrichtung (17), befestigt am Reinigungskopf (4), zur Abtrocknung von Reinigungs- und Desinfektionsmittelresten ein Luftstrahl auf einzelne Bereiche der Tastaturoberfläche geleitet. Dabei kann die Zuluft mittels einer regelbaren elektrischen Nacherhitzerbaugruppe (10) auf die notwendige Trocknungstemperatur erwärmt werden. Die Luft-Trocknungsfunktion arbeitet in Form eines Umluftsystems. Die belastete Abluft aus der Reinigungssektion (2) wird dabei über die Absaugeinrichtung (12) abgesaugt und dem auswechselbaren speziellen Filter (13) zugeführt. Hier erfolgt eine Reinigung und Aufbereitung der Abluft..
Anfallende Flüssigkeitsreste in der Reinigungssektion (2) werden über ein Auslassventil (23) in einen Auffangbehälter (18) geleitet.
Nach Abschluss der Reinigungsprozeduren informiert die Bedieneinrichtung den Benutzer über optische bzw. akustische Anzeigen und gibt die zusätzlich die mechanisch gesicherte Klappe (19) zur Entnahme der gereinigten Tastatur frei.
Das Gehäuse der Reinigungssektion (2) und die Komponenten der Versorgungseinheit (7) sind in einem kompakten Gehäuse (16) in Form eines Standgerätes untergebracht, so ausgeführt, dass die verschließbare Klappe (19) der Reinigungssektion und die Bedieneinrichtung (14) in einer arbeitsplatzgerechten Höhe vom Fußboden auf der Oberseite des Gerätes angebracht sind.

### Bezugszeichenübersicht

- 1: Tastatur
- 2: Reinigungssektion
- 3: Halterungsvorrichtung
- 4: Reinigungskopf
- 5: Mechanischer Antrieb
- 6: Düsenanordnung
- 7: Versorgungsteil
- 8: Vorratsbehälter
- 9: Flexible Rohrleitungen
- 10: Elektrischer Nacherhitzerbaugruppe
- 11: Sprüheinrichtung
- 12: Absaugeinrichtung
- 13: Spezielles Luftfilter
- 14: Bedieneinrichtung
- 15: Steuerungsbaugruppe
- 16: Kompaktes Gehäuse
- 17: Einstellbare Luft-Ausblasvorrichtung
- 18: Auffangbehälter
- 19: Verschließbare Klappe
- 20: Dosierbaugruppen
- 21: Bürstenanordnungen
- 22: Schnell-Steckverbinder-Elemente
- 23: Auslassventil
- 24: Luft-Aufbereitungsbaugruppe
- 25: Sprüheinrichtung für Desinfektionsmittel
- 26: geschlossenes Gehäuse
- 27: Schnellverschlüsse

## Patentansprüche

1. Anordnung zur automatischen Reinigung von Computertastaturen, **dadurch gekennzeichnet, dass** die Anordnung eine Reinigungssektion (2) enthält mit einer mechanischen Halterungsvorrichtung (3) in die, die zu reinigenden Tastaturen (1) eingelegt werden, wobei die Halterungen so angeordnet sind, dass die Oberflächen der Tastenelemente im Arbeitsbereich eines Reinigungskopfes (4) mit mechanischen Befestigungen in der Reinigungssektion (2) ausgerüstet mit mechanischen Antrieben (5) liegen und der Reinigungskopf so ausgeführt ist, dass er neben Bürstenanordnungen (21) für die mechanische Reinigung weiter Sensorbaugruppen zur Abtastung der Tastenkonturen für eine variable Einstellung von Arbeitspositionen des Reinigungskopfes und ferner Sprüheinrichtungen (11) zum begleitenden Auftragen von Flüssigkeiten für die Bürstenreinigung und Desinfektion der Tastenoberflächen und Zwischenräume enthält und ferner einstellbare Luft-Ausblasvorrichtungen zur Einleitung von Luftströmen auf die Tastenoberflächen für eine Abtrocknung von Feuchtigkeitsrückständen
und einen Versorgungsteil (7) mit Vorratsbehältern (8) für Reinigungs- und Desinfektionsmittel und Auffangbehälter (18) für anfallende Flüssigkeitsreste enthält, die über lösbare flexible Rohrleitungen (9) mit den Sprüheinrichtungen, Luftauslässen und Abläufen verbunden sind und ferner einer Luft-Aufbereitungsbaugruppe (24) mit einem regelbaren elektrischen Luftnacherhitzer (10), der über flexible Rohrleitungen mit den Luftdüsen (17) verbunden ist und weiter einer Absaugeinrichtung (12), die die Abluft aus der Reinigungssektion (2) absaugt, über ein spezielles Luftfilter (13) reinigt und nachfolgend über einen Fortluft - Auslass ableitet und weiter eine Bedieneinrichtung (14) verbunden mit einer elektronische Steuerungsbaugruppe (15) zur Steuerung der mechanischen, elektrischen, pneumatischen und elektronischen Funktionen für die mechanischen Antriebe (5) des Reinigungskopfes, der Flüssigkeitspumpen, der Luftaufbereitungsbaugruppe und weiteren elektrischen und elektronischen Bauteile, die für die einzelnen Reinigungsvorgänge notwendig sind enthält, die so ausgeführt ist, dass der Benutzer über Bedienelemente und Anzeigen an der Bedieneinrichtung (14) das notwendige Reinigungsprogramm auswählen, starten und den Reinigungsvorgang überwachen kann,
wobei die einzelnen Teile der Anordnung in einem kompakten Gehäuse (16) so untergebracht sind, dass mit entsprechenden Öffnungen im Versorgungsteil (7) ein Austausch der Vorratsbehälter (8), Auffangbehälter (18) und anderen Verschleißteile des Luftfilters (13) jederzeit möglich ist und über eine verschließbare Klappe (19) in der Reinigungssektion (2) die zu reinigenden Tastaturen (1) eingelegt und entnommen werden können.

2. Anordnung zur automatischen Reinigung von Computertastaturen nach Anspruch 1, **dadurch gekennzeichnet, dass** die Halterungsvorrichtung (3) für Tastaturen (1) so ausgeführt ist, dass sich damit unterschiedlich ausgeführte Tastaturen befestigen lassen unter Verwendung variabel verstellbarer Rahmenelemente, die sich an die jeweilige Tastaturkontur anlegen lassen und mit handbedienbaren Schnellverschlüssen (27) mechanisch sicher verschließen lassen.

3. Anordnung zur automatischen Reinigung von Computertastaturen nach Anspruch 2, **dadurch gekennzeichnet, dass** die Halterungsvorrichtung (3) für Tastaturen (1) so ausgeführt ist, dass dort an definierten Positionen spezielle lösbare Halterungselemente vorhanden sind, die mit passenden Gegenstücken, angebracht an den Unterseiten der Tastaturen, eine funktionsgerechte Verbindung herstellen können.

4. Anordnung zur automatischen Reinigung von Computertastaturen nach Anspruch 2, **dadurch gekennzeichnet, dass** die Halterungsvorrichtung (3) so angeordnet ist, dass nach Befestigung der Tastatur die Tastenoberfläche in eine horizontale Lage zum parallel angeordneten Reinigungskopf (4) positioniert wird.

5. Anordnung zur automatischen Reinigung von Computertastaturen nach Anspruch 2, **dadurch gekennzeichnet, dass** die Halterungsvorrichtung (3), so angeordnet ist, dass nach Befestigung der Tastatur die Tastenoberfläche in eine vertikale Lage zum parallel angeordneten Reinigungskopf positioniert wird.

6. Anordnung zur automatischen Reinigung von Computertastaturen nach Anspruch 1, **dadurch gekennzeichnet, dass** im Bereich der Halterungsvorrichtung (3) elektronische Baugruppen in Form optischer Sensoren oder drahtlos wirkender Transponder - Antennen zur Erkennung des Ausführungstyps der eingelegten Tastatur vorhanden sind, die je nach Ausführung von innerhalb oder außerhalb der Tastatur angebrachten Kennzeichnungselementen den Tastaturtyp durch drahtlose oder optische Verfahren erkennen können und die Daten zur Steuerungsbaugruppe übermitteln.

7. Anordnung zur automatischen Reinigung von Computertastaturen nach Anspruch 1, **dadurch gekennzeichnet, dass** im Bereich der Halterungsvorrichtung (3) Anschlussbuchsen für die an kabelbetriebenen Tastaturen befindlichen Steckverbindungen vorhanden sind, die mit der Steuerungsbaugruppe (15) verbunden sind und über die zum einen eine Erkennung des jeweils vorhandenen Ausführungstyps der Tastatur und zum anderen Diagnoseprozeduren von Tastatur Funktionen durchgeführt werden können.

8. Anordnung zur automatischen Reinigung von Computertastaturen nach Anspruch 1, **dadurch gekennzeichnet, dass** im Bereich der Halterungsvorrichtung (3) elektronische Baugruppen mit Anschluss an die Steuerungsbaugruppe (15) vorhanden sind, mit deren Hilfe ein drahtloser Informationsaustausch mit der in Tastaturen verschiedener Ausführungen vorhandenen drahtlosen Sendebaugruppen eine Durchführung von Diagnoseprozeduren von Tastatur Funktionen durchgeführt werden kann.

9. Anordnung zur automatischen Reinigung von Computertastaturen nach Anspruch 1, **dadurch gekennzeichnet, dass** die Reinigung so erfolgt, dass sich dabei ein beweglich gestalteter, vorzugsweise mehrdimensional angetriebner Reinigungskopf (4) mit motorisch angetriebener Bürstenanordnung, über eine fest stehende Tastatur bewegt.

10. Anordnung zur automatischen Reinigung von Computertastaturen nach Anspruch 1, **dadurch gekennzeichnet, dass** die Reinigung so erfolgt, dass die Halterungsvorrichtung (3) mit einem vorzugsweise mehrdimensional wirkenden Antrieben ausgerüstet ist und so die Tastatur an dem fest stehenden Reinigungskopf mit den motorisch angetriebenen Büstenanordnungen in geeigneter Weise vorbei bewegt.

11. Anordnung zur automatischen Reinigung von Computertastaturen nach Anspruch 1, **dadurch gekennzeichnet, dass** der Reinigungskopf eine motorisch angetriebene Bürstenanordnung in Form von Walzen- oder Riemenbürsten enthält, wobei die Ausführung der Besatzanordnung, Länge, Anzahl und Materialausführung der Borsten auf dem ein oder mehrteiligen Grundkörper der Bürste so gestaltet ist, dass sich damit die kompletten Oberflächenkonturen der einzelnen Tasten und deren Zwischenräume beim Bewegen über der Tastatur erreichen lassen.

12. Anordnung zur automatischen Reinigung von Computertastaturen nach Anspruch 1, **dadurch gekennzeichnet, dass** bei Walzenbürsten über eine flexibel gestaltete Achse die neben den äußeren Halterungen weitere über den Achsenbereich speziell verteilt angebrachte verstellbare Halterungen verfügt, die so gestaltet sind, dass mit einer Längenänderung dieser Halterungen gegenüber den feststehenden äußeren Halterungen die flexible Achse so geformt wird, dass damit sämtliche Konturen bei vorzugsweise konkav oder konvex gewölbten Tastenoberflächen erreicht werden können.

13. Anordnung zur automatischen Reinigung von Computertastaturen nach Anspruch 11, **dadurch gekennzeichnet, dass** der motorisch Antrieb für die Achse der Walzenbürste so gestaltet ist, dass die Drehbewegung in einer modulierten Form erfolgt, so ausgeführt, dass neben der normalen rotierenden Drehbewegung Bewegungen in axialer Richtung ausführt werden mit dem Ziel sämtliche Räume zwischen den Tasten zu erreichen, wobei die erforderliche Größe der Amplitude der axialen Bewegung passend zum jeweiligen Anwendungsfall eingestellt werden kann.

14. Anordnung zur automatischen Reinigung von Computertastaturen nach Anspruch 11, **dadurch gekennzeichnet, dass** die Achse der Walzenbürste so gestaltet ist, dass über innen liegende rohrförmige Hohlräume Reinigungsflüssigkeit zu einer Anzahl Öffnungen, die über die Bürstenoberfläche verteilt sind, auf die Bosten und damit auf die zu reinigenden Oberflächen gelangen kann.

15. Anordnung zur automatischen Reinigung von Computertastaturen nach Anspruch 9, **dadurch gekennzeichnet, dass** der Reinigungskopf mit Walzen - oder Riemenbürsten so gestaltet ist, dass ein zweidimensional wirkender Antrieb vorhanden ist, mit deren Hilfe die Bürstenanordnungen jeweils in Längs- oder Querrichtung zur Tastaturoberfläche eingesetzt werden kann.

16. Anordnung zur automatischen Reinigung von Computertastaturen nach Anspruch 1, **dadurch gekennzeichnet, dass** die Anordnung einen oder mehrere Reinigungsköpfe mit unterschiedlichen technischen Ausstattungen enthalten kann, die im Reinigungsablauf zeitlich gleichzeitig oder je nach Gestaltung der einzelnen Steuerungsprogramme variabel eingesetzt werden können.

17. Anordnung zur automatischen Reinigung von Computertastaturen nach Anspruch 1, **dadurch gekennzeichnet, dass** bei Reinigungsköpfen mit Tellerbürsten eine universelle Halterung für die Bürsten vorhanden ist, mit deren Hilfe es möglich ist, während des Reinigungsablaufes unterschiedliche Bürstenausführungen für eine Vor - oder Nachreinigungen automatisch aus einem in der Reinigungssektion (2) vorhandenen Magazin aufzunehmen und wieder abzulegen und die Bürsten bei vorhandenen Abnutzungserscheinungen oder starken Verschmutzungen im Rahmen von Wartungsarbeiten ohne Demontageaufwand am Reinigungskopf (4) auszutauschen.

18. Anordnung zur automatischen Reinigung von Computertastaturen nach Anspruch 1 , **dadurch gekennzeichnet, dass** in der Reinigungssektion (2) eine mechanisch wirkende Baugruppe vorhanden ist, die in Form einer Selbstreinigungsstation zur Reinigung der Verschmutzungen an Bürsten nach einer Anzahl von Reinigungszyklen verwendet werden kann, die vorzugsweise grobporige Reinigungsplatten verschiedener Abmessungen und Materialien enthält, an der die bewegten Bürsten unter Verwendung von Reinigungsmittel vorhandene Ablagerungen an den Borstenoberflächen abstreifen können.

19. Anordnung zur automatischen Reinigung von Computertastaturen nach Anspruch 18, **dadurch gekennzeichnet, dass** die mechanische Ausführung der Reinigungsplatten in der Selbstreinigungsstation mittels lösbarer mechanischer Befestigungen erfolgt ist und der Bediener einen Austausch verbrauchter Reinigungsplatten nach entsprechender Anzeige an der Bedieneinrichtung (14) erledigen kann.

20. Anordnung zur automatischen Reinigung von Computertastaturen nach Anspruch 1, **dadurch gekennzeichnet, dass** am Reinigungskopf (4) mehrdimensional wirkende Antriebe (5) eingesetzt sind, damit die Bürstenanordnungen zum einen die Tastenoberflächen und Zwischenräume in der zweidimensionalen Tastenebene erreichen können und zum anderen den Abstand zu den Tastenoberflächen bei vorzugsweise Tastaturen mit konkav oder konvex gewölbten Tastenkonturen verändern und bei Notwendigkeit auch eine zusätzliche Neigung der Arbeitsebenen der Bürstenkörper bei vorzugsweise Tellerbürsten ausführen können.

21. Anordnung zur automatischen Reinigung von Computertastaturen nach Anspruch 1, **dadurch gekennzeichnet, dass** als mechanische Antriebe (5) für den Reinigungskopf (4) zum einen drehzahlgeregelte Elektromotoren mit Direktantrieb oder Getriebeanordnungen und zum anderen pneumatische Antriebslösungen verwendet werden.

22. Anordnung zur automatischen Reinigung von Computertastaturen nach Anspruch 21, **dadurch gekennzeichnet, dass** für die Optimierung der Ansteuerung der mechanischen Antriebe (5) für den Reinigungskopf (4) elektronische Baugruppen eingesetzt sind, die über eine begleitende Messung elektrischer und mechanischer Parameter zum einen die Einhaltung der notwendigen Motor-Drehzahlen und zum anderen den Anpressdruck der Borsten anf den Tastaturoberflächen zur Verhinderung von Beschädigungen an den Tastenoberflächen und hier vorzugsweise von Beschriftungen überwachen können.

23. Anordnung zur automatischen Reinigung von Computertastaturen nach Anspruch 1, **dadurch gekennzeichnet, dass** im Bereich des Reinigungskopfes (4) elektronische Baugruppen vorzugsweise in Form optischer Sensoren vorhanden sind, die mit der Steuerungsbaugruppe (15) verbunden sind und mit deren Hilfe die Kontur der Tastaturoberfläche, die Anzahl und Positionen der Tasten und Zwischenräume mittels optischer Verfahren vor - oder während des Reinigungsablaufes erfasst werden kann.

24. Anordnung zur automatischen Reinigung von Computertastaturen nach Anspruch 1, **dadurch gekennzeichnet, dass** im Bereich des Reinigungskopfes (4) eine einstellbare Sprüheinrichtung (11) zum Auftragen von Reinigungsmittel auf definierte Stellen der Tastaturoberfläche vorhanden ist , deren Sprühkopf so ausgeführt ist, dass zum einen die austretende Flüssigkeitsmenge und die Größe der Auftragsfläche variabel dosierbar ist und zum anderen die Flüssigkeit auch in Sprühnebelform auf die jeweils zu reinigende Oberflächenposition ausgebracht werden kann.

25. Anordnung zur automatischen Reinigung von Computertastaturen nach Anspruch 23, **dadurch gekennzeichnet, dass** die einstellbare Sprüheinrichtung (11) bei fest stehenden Büsten so angeordnet ist, dass die Flüssigkeiten jeweils vor Beginn der Bürstenfunktion aufgetragen wird und bei bewegtem Reinigungskopf die Sprüheinrichtung (11) zum einen direkt am Reinigungskopf befestigt oder zum anderen über einen eigenen mechanischen Antrieb verfügt.

26. Anordnung zur automatischen Reinigung von Computertastaturen nach Anspruch 17, **dadurch gekennzeichnet, dass** bei Reinigungsköpfen, mit vorzugsweise Tellerbürsten, diese derart ausgeführt sind, dass die Reinigungsflüssigkeit über rohrförmig gestaltete Bürstenhalterungen und Transportöffnungen mit entsprechenden Düsen in den Grundkörpern der Tellerbürsten, vorzugsweise zwischen den Borstenbündeln angeordnet, direkt zur Tastaturoberfläche geleitet werden kann.

27. Anordnung zur automatischen Reinigung von Computertastaturen nach Anspruch 1, **dadurch gekennzeichnet, dass** der Reinigungskopf (4) eine einstellbare Sprüheinrichtung (25) zum Auftrag flüssiger Desinfektionsmittel enthält deren Sprühkopf so ausgeführt ist, dass zum einen die austretende Flüssigkeitsmenge und Größe der Auftragfläche variabel dosierbar ist und zum anderen die Flüssigkeit auch in Sprühnebelform auf die jeweils zu reinigenden Oberflächen ausgebracht werden kann.

28. Anordnung zur automatischen Reinigung von Computertastaturen nach Anspruch 27, **dadurch gekennzeichnet, dass** die einstellbare Sprüheinrichtung (25) so montiert ist, dass die Flüssigkeit bei bewegtem Reinigungskopf zum einen direkt am Reinigungskopf befestigt ist oder zum anderen über einen eigenen mechanischen Antrieb verfügt.

29. Anordnung zur automatischen Reinigung von Computertastaturen nach Anspruch 1, **dadurch gekennzeichnet, dass** im Bereich des Reinigungskopfes (4) nur eine einstellbare Sprüheinrichtung vorhanden ist die so ausgeführt ist, dass damit über ein einstellbares Zweiwegeventil mit Anschluss an die Steuerbaugruppe (15) wahlweise zum einen flüssiges Reinigungsmittel und zum anderen Desinfektionsmittel ausgebracht werden kann.

30. Anordnung zur automatischen Reinigung von Computertastaturen nach Anspruch 1 **dadurch gekennzeichnet, dass** im Bereich des Reinigungskopfes (4) eine einstellbare Luft-Ausblasvorrichtung (17) mit Anschluss an die Luftaufbereitungsbaugruppe (24) zur Abtrocknung von Reinigungs- und Desinfektionsmittelresten auf der Tastaturoberfläche vorhanden ist deren Ausblaskopf so ausgeführt ist, dass damit zum einen ein Luftstrahl auf einzelne definierte Stellen oder ganze Bereiche auf der Oberfläche der Tastatur aufgebracht werden kann.

31. Anordnung zur automatischen Reinigung von Computertastaturen nach Anspruch 30 **dadurch gekennzeichnet, dass** die einstellbare Luft-Ausblas-Vorrichtung (17) so montiert ist, dass der Ausblaskopf bei bewegtem Reinigungskopf zum einen direkt am Reinigungskopf befestigt ist oder zum anderen über einen eigenen mechanischen Antrieb verfügt.

32. Anordnung zur automatischen Reinigung von Computertastaturen nach Anspruch 1, **dadurch gekennzeichnet, dass** die Anordnung der Luft - Aufbereitungsbaugruppe (24) mit Verbindung zur Steuerungsbaugruppe (15) so ausgeführt ist, dass über einen Außenlufteinlass die Luft über einen wechselbaren Luftfilter gereinigt und zu einer regelbaren Kompressorbaugruppe mit Ausgleichsbehälter geleitet wird zur Erreichung der notwendigen Druckerhöhung für die Funktion der Auslassdüsen und ferner einer regelbaren elektrischen Nacherhitzerbaugruppe (10) die die Zuluft auf die notwendige Ausblastemperatur mit den für eine optimale Abtrocknung notwendigen Luftfeuchtigkeitswerten sicherstellt wobei die Abluft aus der Reinigungssektion (2) über einen wechselbaren Luftfilter gereinigt wird und über einen Fortluftauslaß abgeführt wird.

33. Anordnung zur automatischen Reinigung von Computertastaturen nach Anspruch 1, **dadurch gekennzeichnet, dass** die Anordnung der Luft - Aufbereitungsbaugruppe (24) in Form eines geschlossenen Umluftsystems arbeitet und dabei der Ablufteinlass direkt mit der Absaugeinrichtung (12) in der Reinigungssektion (2) verbunden ist und zur Reinigung und Aufbereitung der Abluft aus der Reinigungssektion (2) eine spezielle und austauschbare Luftfilterbaugruppe (13) vorhanden ist

34. Anordnung zur automatischen Reinigung von Computertastaturen nach Anspruch 1, **dadurch gekennzeichnet, dass** die Steuerungsbaugruppe (15) digitale und analoge Eingänge zur Aufnahme von Sensordaten zur Erfassung Lufttemperaturen, Luftfeuchtigkeit, Luftdruck, Drehzahlen, mechanischen Anschlägen für Antriebe, Stellanzeigen von Ventilen und Klappen, Füllstandsanzeigen enthält und weiter über digitale und analoge Ausgänge zur Ansteuerung von Motoren, Ventilen, elektro-mechanischen Einstelleinrichtungen und ferner eine Anzahl von Schnittstellen zum Anschluss von Sensoren für die Objekterkennung, die Programmierung, die Durchführung von Diagnose - und Überwachungsprozeduren und Anschlüssen zur Stromversorgung verfügt.

35. Anordnung zur automatischen Reinigung von Computertastaturen nach Anspruch 1, **dadurch gekennzeichnet, dass** die Steuerungsbaugruppe (15) Mikrorechnerbaugruppen mit entsprechenden Speicherbaugruppen enthalten in denen die notwendigen Programme für eine automatische Steuerung der unterschiedlichen Reinigungsabläufe gespeichert sind.

36. Anordnung zur automatischen Reinigung von Computertastaturen nach Anspruch 1, **dadurch gekennzeichnet, dass** an der Anordnung ein für den Bediener zugängliche Bedieneinrichtung (14) mit Anschluss an die Steuerungsbaugruppe (15) vorhanden ist mit digitalen optischen und akustischen Anzeigebaugruppen und ferner Tasten - Bedienbaugruppen die eine Menüführung der einzelnen Reinigungsabläufe ermöglichen.

37. Anordnung zur automatischen Reinigung von Computertastaturen nach Anspruch 1, **dadurch gekennzeichnet, dass** die komplette Reinigungssektion (2) in einem geschlossenen Gehäuse (26), vorzugsweise in korrosionsunabhängiger Edelstahlausführung, so aufgebaut ist, dass sämtliche Medien - Anschlüsse in Form lösbarer Schnell - Steckverbindungselemente (22) zum Austausch der Reinigungssektion (2) zu Wartungszwecken ausgeführt ist.

38. Anordnung zur automatischen Reinigung von Computertastaturen nach Anspruch 37, **dadurch gekennzeichnet, dass** das Gehäuse der Reinigungssektion (2) im unteren Teil so ausgeführt ist, das dort mittels einer Auffangwanne mögliche Reste von Flüssigkeiten aufgefangen und über ein Auslassventil (23) mit Schlauchanschluss an einen austauschbaren Auffangbehälter (18) im Versorgungsteil (7) abgeleitet werden kann.

39. Anordnung zur automatischen Reinigung von Computertastaturen nach Anspruch 1, **dadurch gekennzeichnet, dass** das Gehäuse der Reinigungssektion (2) vorzugsweise im oberen Teil eine verschließbare Klappe (19) als Zugang zur Halterungsvorrichtung (3) oder selbst mit der Halterungsvorrichtung (3) verbunden ist enthält und mit geeigneten Abdichtungsmaterialien ausgerüstet ist, die so ausgeführt ist , dass dort elektromechanisch wirkende Verschließbauteile und Sicherheitstaster mit Anschluss an die Steuerungsbaugruppe (15) angebracht sind, die sicherstellen, dass die verschließbare Klappe (19) während des Reinigungsablaufes durch den Bediener nicht geöffnet werden kann.

40. Anordnung zur automatischen Reinigung von Computertastaturen nach Anspruch 39, **dadurch gekennzeichnet, dass** die verschließbare Klappe (19) eine Sichtöffnung ausgerüstet mit einer Sicherheits - Klarglasscheibe, über die der Bediener von außen den Reinigungsvorgang beobachten kann, enthält.

41. Anordnung zur automatischen Reinigung von Computertastaturen nach Anspruch 1, **dadurch gekennzeichnet, dass** verschließbare Klappen (19) für den Zugang zur Halterungsvorrichtung (3) seitlich an der Reinigungssektion (2) angebracht sind und die Halterungsvorrichtung (3) über eine horizontal wirkende mechanisch angetriebene Schubvorrichtung verfügt über die die Halterungsvorrichtung (3) in den Bereich des Reinigungskopfes gelangt.

42. Anordnung zur automatischen Reinigung von Computertastaturen nach Anspruch 1, **dadurch gekennzeichnet, dass** die Versorgungseinheit (7) so aufgebaut ist, dass hier zum einen entsprechende mechanische Halterungen für die Befestigung der Vorratsbehälter (8) mit Reinigungs- und Desinfektionsmittelflüssigkeit, einen Auffangbehälter (18) für Flüssigkeitsreste, die Baugruppen der Luft-Aufbereitung (24) und der Steuerungsbaugruppe (15) und zum anderen verschließbare Öffnungen zum Zugang zu den einzelnen Bauteilen und Behältern vorhanden sind.

43. Anordnung zur automatischen Reinigung von Computertastaturen nach Anspruch 1 , **dadurch gekennzeichnet, dass** in der Versorgungseinheit (7) Dosierbaugruppen (20) mit Anschluss an die Steuerungsbaugruppe (15) für eine funktionsgerechte Aufbereitung der Reinigungs- und Desinfektionsflüssigkeiten an den Auslässen vorhanden sind, die mittels spezieller Pumpen, Zwischenbehälter, Mehrwegeventilen angeschlossen über flexible Schlauchsysteme, die Flüssigkeiten vor Weiterleitung an die Auslässe am Reinigungskopf (4) in der Reinigungssektion (2) funktionsgerecht aufbereiten.

44. Anordnung zur automatischen Reinigung von Computertastaturen nach Anspruch 1, **dadurch gekennzeichnet, dass** das Gehäuse der Reinigungssektion (2) und die Komponenten der Versorgungseinheit (7) in einem kompakten Gehäuse (16) zum einen in Form eines Standgerätes für den stationären Betrieb bzw. in einem Gerät das auf Arbeitstischen aufgestellt werden kann oder zum anderen in einem stationären Gerät für Wandmontagen untergebracht sind, so ausgeführt, dass vorzugsweise die verschließbare Klappe (19) der Reinigungssektion und die Bedieneinrichtung (14) in einer arbeitsplatzgerechten Höhe vom Fußboden auf der Oberseite des Gerätes angebracht sind.

45. Anordnung zur automatischen Reinigung von Computertastaturen nach Anspruch 1, **dadurch gekennzeichnet, dass** das Gehäuse der Reinigungssektion (2) und die Komponenten der Versorgungseinheit (7) in einem kompakten Gehäuse (16) in Form eines transportablen Gerätes für den mobilen Betrieb untergebracht sind, so ausgeführt, dass über außen am Gerät angebrachte Halterungen, Griffe und Transporträder das Gerät zu Reinigungsarbeiten an verschiedene Orte transportiert werden kann.

46. Anordnung zur automatischen Reinigung von Computertastaturen nach Anspruch 44, **dadurch gekennzeichnet, dass** das Gehäuse eine verschließbare, mit einer Klappe ausgerüstete von außen erreichbare Kammer enthält, in der entsprechende Anschlusskabel und Anschlussbuchsen für die externe Stromversorgung der Steuerungsbaugruppe (15) und eine mögliche DatenKommunikation vorhanden sind.
